# EUROPEAN PATENT SPECIFICATION

(11) **EP 3 269 621 B1**
(45) Date of publication and mention of the grant of the patent: **07.08.2019**
(21) Application number: 17184916.9
(22) Date of filing: 14.11.2013
(51) Int. Cl.: B62D 29/00, B29C 44/12, C09J 7/35, C09J 7/21

(54) **EXPANDING PANEL STIFFENER**
EXPANDIERENDE PLATTENVERSTEIFUNG
EXPANSION DE RENFORT DE PANNEAU

(30) Priority: 14.11.2012 US 201261726259 P
(43) Date of publication of application: 17.01.2018
(62) Divisional of application: 13803328.7
(73) Proprietor: Zephyros Inc., Romeo, MI 48065 (US)
(72) Inventor: QUADERER, Dean, Livonia, MI 48150 (US)
(74) Representative: Kutzenberger Wolff & Partner

(56) References cited:
- US-A1- 2003 039 792
- US-A1- 2007 101 679

## Description

### Technical Field

The present teachings relate generally to a reinforcement member that includes an activatable material and a layer of mesh.

### Background

The transportation industry continues to require methods of reinforcement that minimize production time and effort while improving the strength of reinforcement provided and providing simplified customization of product shape and configuration. There is thus a need in the art of reinforcement for high-strength reinforcing materials that can be easily added to a vehicle panel for localized reinforcement with no additional fastening steps. There is a further need for reinforcing materials that can be easily cut to a desired shape and size without the need for molds or additional forming steps. A method for structurally reinforcing a vehicle body stamping in known from US 2003/0039792 A1. In the known method a vehicle body stamping is provided that includes an area on the stamping requiring structural reinforcement. A preformed pattern is formed by locating a mesh material, e.g. a woven roving, onto an expandable material. The expandable material and mesh material is cut to a size and shape that conforms with the area on the stamping requiring structural reinforcement. Then, the expandable material is contacted with the area of the stamping requiring structural reinforcement such that the expandable material lies in between the area on the stamping requiring structural reinforcement and the mesh material, wherein the expandable material is in direct planar contact with the area on the stamping requiring structural reinforcement.

### Summary of the Invention

The invention is defined by independent claim 1. The dependent claims define advantageous embodiments.

The present teachings contemplate a method for structurally reinforcing a vehicle body stamping comprising forming a tacky expandable structural adhesive material and locating a mesh material onto the expandable material. The method may further include contacting the mesh and expandable material with a vehicle body stamping surface and activating the expandable material to expand by application of heat. The mesh and expandable material may remain in contact with the stamping surface by means of the tacky nature of the expandable material prior to activating the expandable material.

The method is free of any separate fastening step for connecting the expandable material to the body stamping. The method may include flexing the expandable material and mesh to conform to the shape of the body stamping prior to activating the expandable material. The method may include cutting the expandable material to a desired shape prior to locating the mesh onto the expandable material. The method includes cutting the expandable material and mesh located thereon to a desired shape prior to contacting the mesh and expandable material with the vehicle body stamping surface. The step of forming the tacky expandable structural adhesive material may be free of any molding process. The step of locating the mesh onto the expandable material may be free of any separate fastening step for connecting the mesh to the expandable material. The step of activating the expandable material includes volumetric expansion of at least about 100% and less than about 300%. The method may include flexing the expandable material and mesh so that a first portion of the mesh and expandable material is arranged at an angle of 90° or less from a second portion of the mesh and expandable material. The method may include flexing the expandable material and mesh so that a surface of the vehicle body stamping is contacted by the mesh and expandable material that would not be contacted by the mesh and expandable material if the mesh and expandable material were substantially rigid. The mesh may be located onto the expandable material so that the expandable material substantially covers the mesh and is free of any voids on the mesh that are not covered with the expandable material prior to activation. The mesh and expandable material may no longer be flexible after activation of the expandable material. The mesh and expandable material may continue to be flexible after activation of the expandable material.

The teachings herein contemplate a method for the structural reinforcement of body stampings with an expandable structural adhesive material and associated mesh. The device disclosed herein may allow for effective reinforcing of a cavity where no additional fastening steps or fastening means are required.

### Description of the Drawings

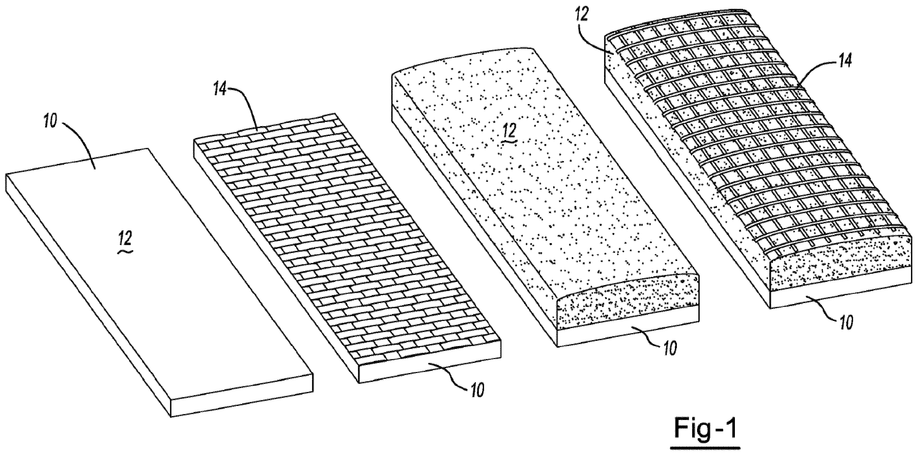

Fig. 1 shows a perspective view of an illustrative example of a device in accordance with the present teachings.

### Detailed Description

This application is related to and claims the benefit of the filing date of U.S. Provisional Application Serial No. 61/726,259 filed November 14, 2012.

The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the above description, but should instead be determined with reference to the appended claims, along with the full scope of equivalents to which such claims are entitled.

Fig. 1 shows the device 10 having an expandable material layer 12. A mesh layer 14 is located in planar contact with the expandable material layer 12.

The expandable material of the present invention is at least partially tacky at room temperature (e.g., about 23° C.) and is also preferably tacky at temperatures between about 0° C. and about 80° C. Additionally, the expandable material preferably exhibits reinforcement characteristics (e.g., imparts rigidity, stiffness, strength or a combination thereof to a member). It is also preferable for the expandable material to be heat activated to expand or otherwise activate and wet surfaces which the expandable material contacts. After expansion or activation, the expandable material preferably cures, hardens and adheres to the surfaces that it contacts. For application purposes, it is often preferable that the expandable material exhibit flexibility, particularly when the expandable material is to be applied to a contoured surface of a vehicle body. Once applied, however, it is typically preferable for the expandable material to be activatable to soften, expand (e.g., foam), cure, harden or a combination thereof. For example, and without limitation, a typical expandable material will include a polymeric material, such as an epoxy resin or ethylene-based polymer which, when compounded with appropriate ingredients (typically a blowing and curing agent), expands and cures in a reliable and predicable manner upon the application of heat or the occurrence of a particular ambient condition. From a chemical standpoint for a thermally-activated material, the expandable material may be initially processed as a flowable material before curing. Thereafter, the base material preferably cross-links upon curing, which makes the material substantially incapable of further flow.

The epoxy may be aliphatic, cycloaliphatic, aromatic or the like. The epoxy may be supplied as a solid (e.g., as pellets, chunks, pieces or the like) or a liquid. The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive. Examples of suitable epoxy-based materials, which may be used as in the base material are sold under the product designations L5020, L5010, L5224, L8000, L5001 and are commercially available from L&L Products, Romeo, Mich. According to preferred formulations, the base material can include up to about 50% by weight epoxy resins, more preferably, up to about 65% by weight epoxy resins, and even more preferably up to about 80% by weight epoxy resins.

In preferred embodiments, a substantial portion of the materials in the expandable material will typically have molecular weights that are low enough to maintain adhesive capability of the base material. For an elastomer-based or epoxy-based base material, it is preferable for at least about 5% by weight of the elastomer or epoxy materials to have a molecular weight less than about 1000 and more preferably at least about 10% by weight of the elastomer or epoxy materials have a molecular weight less than about 1000. It is also contemplated that, for maintaining adhesive capability, components such as plasticizers or processing oils may be added to elastomer-based or epoxy-based materials and particularly to the thermoplastic-based expandable material.

As general guidance for the expandable material, it is preferable that at least 1% by weight of the components have a low enough molecular weight to be a liquid at about 23° C. More preferably, at least 5% by weight of the components have a low enough molecular weight to be a liquid at about 23° C. Still more preferably, at least 10% by weight of the components have a low enough molecular weight to be a liquid at about 23° C.

In most applications, it is undesirable for the expandable material to be reactive at room temperature or otherwise at the ambient temperature in a manufacturing environment (e.g. up to about 40° C. or higher). More typically, the expandable material becomes reactive at higher processing temperatures, such as those encountered in an automobile assembly plant. In such and embodiment, the expandable material may be foamed upon automobile components at elevated temperatures or at higher applied energy levels, e.g., during painting preparation steps. While temperatures encountered in an automobile assembly operation may be in the range of about 148.89° C. to 204.44° C. (about 300° F. to 400° F.), body and paint shop applications are commonly about 93.33° C. (about 200° F.) or slightly higher. If needed, blowing agent activators can be incorporated into the base material to cause expansion at different temperatures outside the above ranges. Generally, suitable expandable materials or foams for the expandable material have a range of expansion ranging from approximately 0 to over 1000 percent.

Advantageously, the expandable material of the present invention may be formed or otherwise processed in a variety of ways. For example, preferred expandable materials can be processed by injection molding, extrusion, compression molding or with a robotically controlled extruder such as a mini-applicator. This enables the formation and creation of part designs that exceed the capability of most prior art materials.

It is contemplated that the base material may be formed of a variety of materials. For example, and without limitation, the base material may be formed primarily of plastics, thermoplastics, epoxy materials, elastomers and the like or combination thereof.

The mesh material located onto the expandable material may include non-conductive threads or wire (e.g., elongated filament, fibrous, or fabric material), which may be applied as a mat, a cloth, a roving, a netting, a mesh, a scrim, or the like. In such embodiments, the strengthening material may be composed, for example, of woven or unwoven fibers, filaments or the like of cotton, glass (e.g., E-glass or S-glass), fiberglass, Mylar, nylon, polyester, carbon, aramid, plastics, polymers (e.g., thermoplastics such as polyamides (e.g., nylon), PET (e.g., Mylar), polycarbonate, polyethylene, polypropylene, polybutylene (e.g., polybutylene terephthalate), polystyrene, polyurethane, vinyl, or any combination thereof, or other materials. As used herein, "threads," or "wire" connotes a single filament of material, a braided bundle of filaments, or an unbraided bundle of filaments.

In other applications, it may appreciable that the mesh material may be bead-like particles, aggregates, hollow material (e.g., hollow particle), or otherwise, or any combination thereof. In such embodiments, the strengthening material may be composed, for example, of particles or the like of glass (e.g., E-glass or S-glass), fiberglass, nylon, polyester, carbon, aramid, plastics, polymers (e.g., thermoplastics such as polyamides (e.g., nylon), polycarbonate, polyethylene, polypropylene, polybutylene (e.g., polybutylene terephthalate), polystyrene, polyurethane, vinyl, or any combination thereof), or other materials.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the Detailed Description of the Invention of a range in terms of at '''x' parts by weight of the resulting polymeric blend composition" also contemplates a teaching of ranges of same recited amount of "x" in percent by weight of the resulting polymeric blend composition."

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. By use of the term "may" herein, it is intended that any described attributes that "may" be included are optional.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

It is understood that the above description is intended to be illustrative and not restrictive. Many embodiments as well as many applications besides the examples provided will be apparent to those of skill in the art upon reading the above description. The scope of the invention should, therefore, be determined not with reference to the above description, but should instead be determined with reference to the appended claims, along with the full scope of equivalents to which such claims are entitled. The omission in the following claims of any aspect of subject matter that is disclosed herein is not a disclaimer of such subject matter, nor should it be regarded that the inventors did not consider such subject matter to be part of the disclosed inventive subject matter.

## Claims

1. A method for structurally reinforcing a vehicle body stamping comprising:
providing a vehicle body stamping including an area on the stamping requiring structural reinforcement;
forming a tacky expandable structural adhesive material (12) including at least 1% by weight of components having a low enough molecular weight to be a liquid at about 23° C;
locating a mesh material (14) onto the expandable material (12) wherein the mesh (14) adheres to the expandable material (12) due to the tacky nature of the expandable material (12) and wherein the mesh (14) is located in direct planar contact with the expandable material (12);
cutting the expandable material (12) and mesh material (14) to a size and shape that conforms with the area on the stamping requiring structural reinforcement;
contacting the expandable material (12) with the area of the stamping requiring reinforcement, wherein the expandable material (12) lies in between the area on the stamping requiring structural reinforcement and the mesh material (14) and
wherein the expandable material (12) is in direct planar contact with the area on the stamping requiring structural reinforcement;
wherein the expandable material (12) is adapted to expand upon exposure to a predetermined temperature to expand in an amount that is from 100% of its original volume to 300% of its original volume;
wherein the method is free of any separate fastening step for connecting the expandable material (12) to the body stamping.

2. The method of claim 1, including flexing the expandable material (12) and mesh (14) to conform to the shape of the area on the stamping requiring reinforcement prior to activating the expandable material (12).

3. The method of claim 1 or claim 2, including cutting the expandable material (12) to a desired shape prior to locating the mesh (14) onto the expandable material (12).

4. The method of any of the preceding claims, wherein the step of forming the tacky expandable structural adhesive material (12) is free of any molding process.

5. The method of any of the preceding claims, wherein the step of locating the mesh (14) onto the expandable material (12) is free of any separate fastening step for connecting the mesh (14) to the expandable material (12).

6. The method of any of the preceding claims, including activating the expandable material (12) by exposure to heat.

7. The method of any of the preceding claims, including flexing the expandable material and mesh so that a first portion of the mesh and expandable material is arranged at an angle of 90° or less from a second portion of the mesh and expandable material.

8. The method of any of the preceding claims, including flexing the expandable material (12) and mesh (14) so that a surface of the vehicle body stamping is contacted by the expandable material (12) that would not be contacted by the expandable material (12) if the expandable material (12) were substantially rigid.

9. The method of any of the preceding claims, wherein the mesh (14) is located onto the expandable material (12) so that the expandable material (12) substantially covers the mesh (14) and is free of any voids on the mesh (14) that are not covered with the expandable material (12) prior to activation.

10. The method of any of the preceding claims, wherein the mesh (14) and expandable material (12) are no longer flexible after activation of the expandable material (12).

11. The method of any of the preceding claims, wherein the mesh (14) and expandable material (12) continue to be flexible after activation of the expandable material (12).

12. The method of any of the preceding claims, including extruding the expandable material (12).

## Patentansprüche

1. Verfahren zum strukturellen Verstärken eines Fahrzeugkarosseriestanzteils, umfassend:
Bereitstellen eines Fahrzeugkarosseriestanzteils, das eine Fläche auf dem Stanzteil beinhaltet, die strukturelle Verstärkung erfordert;
Ausbilden eines klebrigen, ausdehnbaren, strukturellen, haftenden Materials (12), das mindestens 1 Gew.-% Komponenten beinhaltet, die ein molekulares Gewicht aufweisen, das niedrig genug ist, um bei etwa 23°C eine Flüssigkeit zu sein;
Platzieren eines Netzmaterials (14) auf dem ausdehnbaren Material (12), wobei das Netzmaterial (14) aufgrund der klebrigen Natur des ausdehnbaren Materials (12) an dem ausdehnbaren Material (12) haftet, und wobei sich das Netz (14) in direktem ebenflächigen Kontakt mit dem ausdehnbaren Material (12) befindet;
Schneiden des ausdehnbaren Materials (12) und des Netzmaterials (14) auf eine Größe und Form, die der Fläche auf dem Stanzteil entspricht, die strukturelle Verstärkung erfordert;
Kontaktieren des ausdehnbaren Materials (12) mit der Fläche des Stanzteils, die Verstärkung erfordert, wobei das ausdehnbare Material (12) zwischen der Fläche auf dem Stanzteil, die strukturelle Verstärkung erfordert, und dem Netzmaterial (14) liegt, und wobei sich das ausdehnbare Material (12) in direktem ebenflächigen Kontakt mit der Fläche auf dem Stanzteil befindet, die strukturelle Verstärkung erfordert;
wobei das ausdehnbare Material (12) dazu ausgebildet ist, sich bei Aussetzung gegenüber einer vorbestimmten Temperatur in einem Betrag auszudehnen, der von 100 % seines ursprünglichen Volumens bis 300 % seines ursprünglichen Volumens reicht;
wobei das Verfahren frei von jeglichem getrennten Befestigungsschritt zum Verbinden des ausdehnbaren Materials (12) mit dem Karosseriestanzteil ist.

2. Verfahren nach Anspruch 1, das Biegen des ausdehnbaren Materials (12) und des Netzes (14) beinhaltet, sodass sie der Form der Fläche auf dem Karosseriestanzteil, die Verstärkung erfordert, vor dem Aktivieren des ausdehnbaren Materials (12) entsprechen.

3. Verfahren nach Anspruch 1 oder Anspruch 2, das Schneiden des ausdehnbaren Materials (12) in eine gewünschte Form, bevor das Netz (14) auf dem ausdehnbaren Material (12) platziert wird, beinhaltet.

4. Verfahren nach einem der vorangehenden Ansprüche, wobei der Schritt des Ausbildens des klebrigen, ausdehnbaren, strukturellen, haftenden Materials (12) frei von jeglichem Gießprozess ist.

5. Verfahren nach einem der vorangehenden Ansprüche, wobei der Schritt des Platzierens des Netzes (14) auf dem ausdehnbaren Material (12) frei von jeglichem getrennten Befestigungsschritt zum Verbinden des Netzes (14) mit dem ausdehnbaren Material (12) ist.

6. Verfahren nach einem der vorangehenden Ansprüche, das ein Aktivieren des ausdehnbaren Materials (12) durch Exposition gegenüber Wärme beinhaltet.

7. Verfahren nach einem der vorangehenden Ansprüche, das Biegen des ausdehnbaren Materials und des Netzes beinhaltet, sodass ein erster Teil des Netzes und des ausdehnbaren Materials in einem Winkel von 90° oder weniger von einem zweiten Teil des Netzes und des ausdehnbaren Materials angeordnet ist.

8. Verfahren nach einem der vorangehenden Ansprüche, das Biegen des ausdehnbaren Materials (12) und des Netzes (14) beinhaltet, sodass eine Oberfläche des Fahrzeugkarosseriestanzteils durch das ausdehnbare Material (12) kontaktiert wird, welche nicht durch das das ausdehnbare Material (12) kontaktiert würde, wenn ausdehnbare Material (12) im Wesentlichen starr wäre.

9. Verfahren nach einem der vorangehenden Ansprüche, wobei sich das Netz (14) auf dem ausdehnbaren Material (12) befindet, sodass das ausdehnbare Material (12) das Netz (14) im Wesentlichen bedeckt und frei von jeglichen Lücken auf dem Netz (14) ist, die vor der Aktivierung nicht von dem ausdehnbaren Material (12) bedeckt sind.

10. Verfahren nach einem der vorangehenden Ansprüche, wobei das Netz (14) und das ausdehnbare Material (12) nach Aktivierung des ausdehnbaren Materials (12) nicht länger flexibel sind.

11. Verfahren nach einem der vorangehenden Ansprüche, wobei das Netz (14) und das ausdehnbare Material (12) nach Aktivierung des ausdehnbaren Materials (12) auch weiterhin flexibel sind.

12. Verfahren nach einem der vorangehenden Ansprüche, einschließlich Extrudieren des ausdehnbaren Materials (12) .

## Revendications

1. Procédé permettant de renforcer structurellement un estampage de carrosserie de véhicule consistant à :
fournir un estampage de carrosserie de véhicule comprenant une surface sur l'estampage nécessitant un renforcement structurel ;
former un matériau adhésif structurel expansible collant (12) comprenant au moins 1 % en poids de composants présentant un poids moléculaire suffisamment bas pour être un liquide à environ 23 °C ;
positionner un matériau de treillis (14) sur le matériau expansible (12), le treillis (14) adhérant au matériau expansible (12) en raison de la nature collante du matériau expansible (12) et dans lequel le treillis (14) est positionné en contact plan direct avec le matériau expansible (12) ;
couper le matériau expansible (12) et le matériau de treillis (14) à une taille et une forme qui épouse la forme de la surface sur l'estampage nécessitant un renforcement structurel ;
mettre en contact le matériau expansible (12) avec la surface de l'estampage nécessitant un renforcement structurel, dans lequel le matériau expansible (12) repose entre la surface sur l'estampage nécessitant un renforcement structurel et le matériau de treillis (14) et dans lequel le matériau expansible (12) est en contact plan direct avec la surface sur l'estampage nécessitant un renforcement structurel ;
dans lequel le matériau expansible (12) est conçu pour s'expanser lors d'une exposition à une température prédéfinie pour une expansion à raison d'une quantité allant de 100 % de son volume d'origine à 300 % de son volume d'origine ;
dans lequel le procédé est exempt d'une quelconque étape de fixation distincte permettant de relier le matériau expansible (12) à l'estampage de carrosserie.

2. Procédé selon la revendication 1, comprenant la flexion du matériau expansible (12) et du treillis (14) afin d'épouser la forme de la surface sur l'estampage nécessitant un renforcement avant l'activation du matériau expansible (12).

3. Procédé selon la revendication 1 ou la revendication 2, comprenant la coupe du matériau expansible (12) à une forme souhaitée avant le positionnement du treillis (14) sur le matériau expansible (12).

4. Procédé selon l'une quelconque des revendications précédentes, dans lequel l'étape de formation du matériau adhésif structurel expansible collant (12) est exempte de tout processus de moulage.

5. Procédé selon l'une quelconque des revendications précédentes, dans lequel l'étape de positionnement du treillis sur le matériau expansible (12) est exempte de toute étape de fixation distincte permettant de relier le treillis (14) au matériau expansible (12).

6. Procédé selon l'une quelconque des revendications précédentes, comprenant l'activation du matériau expansible (12) par une exposition à la chaleur.

7. Procédé selon l'une quelconque des revendications précédentes, comprenant la flexion du matériau expansible et du treillis de telle sorte qu'une première partie du treillis et du matériau expansible soit agencée à un angle inférieur ou égal à 90° par rapport à une seconde partie du treillis et du matériau expansible.

8. Procédé selon l'une quelconque des revendications précédentes, comprenant la flexion du matériau expansible (12) et du treillis (14) de sorte qu'une surface de l'estampage de la carrosserie de véhicule soit touchée par le matériau expansible (12) alors qu'elle ne serait pas touchée par le matériau expansible (12) si le matériau expansible (12) était sensiblement rigide.

9. Procédé selon l'une quelconque des revendications précédentes, dans lequel le treillis (14) est positionné sur le matériau expansible (12) de sorte que le matériau expansible (12) recouvre sensiblement le treillis (14) et soit exempt de vides sur le treillis (14) qui ne sont pas recouverts par le matériau expansible (12) avant l'activation.

10. Procédé selon l'une quelconque des revendications précédentes, dans lequel le treillis (14) et le matériau expansible (12) ne sont plus flexibles après l'activation du matériau expansible (12).

11. Procédé selon l'une quelconque des revendications précédentes, dans lequel le treillis (14) et le matériau expansible (12) continuent à être flexibles après l'activation du matériau expansible (12).

12. Procédé selon l'une quelconque des revendications précédentes, consistant à extruder le matériau expansible (12).
